# EUROPEAN PATENT APPLICATION

(11) **EP 1 517 534 A2**
(43) Date of publication of application: **23.03.2005**
(21) Application number: 04255549.0
(22) Date of filing: 14.09.2004
(51) Int. Cl.: H04N 1/00, H04M 1/57

(54) **Communication apparatus having voice synthesizing means, information processing method, program and storage medium**

(30) Priority: 18.09.2003 JP 2003326439
(71) Applicant: CANON KABUSHIKI KAISHA, Tokyo (JP)
(72) Inventor: Yamamoto, Hiroki, Ohta-ku Tokyo (JP)
(74) Representative: Beresford, Keith Denis Lewis

(57) **Abstract**

The entertainment value of a communication apparatus having a voice synthesizing function is enhanced by allowing the user to make a voice-synthesis-related setting for every communicating party. The apparatus, which has a function for producing synthesized voice of information relating to a communicating party and outputting the synthesized voice, includes setting means for making a voice-synthesis-related setting for every communicating party in advance; identification means for identifying a communicating party; and voice synthesizing means for producing synthesized voice of information relating to the communicating party based upon the voice-synthesis-related setting regarding the communicating party identified.

## Description

### FIELD OF THE INVENTION

This invention relates to a communication apparatus such as a telephone or facsimile machine having a voice synthesizing function.

### BACKGROUND OF THE INVENTION

Many mobile telephones and the like made available in recent years have a function which, by utilizing a function for acquiring the telephone number of a caller, allows the user of the telephone to set an incoming-call tone for every caller. Assume that the user of such a mobile telephone has previously registered an electronic tone or so-called "incoming-call alert melody" issued at the time of an incoming call, together with a telephone number or name, etc.., in a telephone directory of the mobile telephone. If a call arrives from this registered number, the telephone number and name of the caller can be displayed on a liquid crystal display screen and the electronic tone corresponding to this telephone number can be sounded. This function allows the user to ascertain who the caller is without looking at the telephone number or name displayed on the liquid crystal display screen. (In other words, the user can readily identify the communicating party.) Another mobile telephone known in the art makes it possible for the user to similarly set an incoming alert tone for every source of transmission with regard to incoming e-mail as well.

A function for thus setting an incoming alert tone for every communicating party is also applicable to ordinary telephones and is not restricted to mobile telephones. For example, an ordinary telephone may be provided with a service such as "NUMBER DISPLAY", which notifies the user of the telephone number of the caller, or "NAME DISPLAY", which notifies the user of the name of the caller. By utilizing such a service, an incoming alert tone can be set on a per-caller basis.

As another example of a function that allows the user to readily identify a caller, there is an arrangement in which the communicating party is reported to the user directly by voice synthesis rather than by changing the incoming alert tone. For example, the specification of Japanese Patent Application Laid-Open No. 5-276239 discloses a technique in which, rather than an incoming-call tone being sounded, data for voicing "Call from _" aloud is registered beforehand, whereby the user is notified of the communicating party by synthesized voice.

Furthermore, a 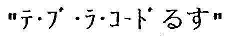 facsimile machine FAX SFX-LP60 (as December 18, 2002) manufactured and sold by Sanyo Electric Company has a voice synthesizing function and a function for calling out the name of the other party aloud by a synthesized voice when an incoming call arrives or when a telephone call is made. By thus notifying of the communicating party by voice synthesis at the time of an incoming call, the user can clearly ascertain the caller. This is more convenient in comparison with the arrangement in which the calling party is discriminated based upon a difference in the tonal quality of the incoming alert tone.

Furthermore, the above-described facsimile machine supports an "L-Mode" service in which it is connected to the Internet via a telephone to achieve e-mail and WWW access. This facsimile machine also has a function for reading aloud received e-mail by synthesized voice (namely a function for informing the user of the content of communication).

This function utilizing voice synthesis is convenient when one's hands are not free, as when preparing a meal, or when one is too far from the telephone to see the liquid crystal display screen.

However, when the user is notified of the communicating party or content of communication by the method of the prior art described above, the same voice synthesis is merely performed regardless of the communicating party. A problem which arises is that such a function is not interesting to use. By contrast, if the voice could be set in accordance with user preference, as by using a plain voice in case of mail from one's office and a cute child's voice in case of mail from a child, then a convenience obtained is that the communicating party can be identified by the kind of voice called out. At the same time, enjoyment is experienced by selective use of voice in a manner similar to the setting of an incoming-call alert melody in a mobile telephone. Further convenience is obtained if various types of voice-synthesis settings can be made for every communicating party, such as by setting volume or speed at which information is called out, at the same time as the type of voice synthesized. Even greater convenience is obtained if setting of voice synthesis can be performed individually for every item that is to be read aloud by synthesized sound.

### SUMMARY OF THE INVENTION

Accordingly, an object of the present invention is to enhance the entertainment value of a communication apparatus having a voice synthesizing function by allowing the user to make a voice-synthesis-related setting for every communicating party.

In order to achieve the above object, a communication apparatus according to the present invention has the following arrangement. Specifically,
a communication apparatus for producing synthesized voice of information relating to a communicating party and outputting the synthesized voice, characterized by comprising:
setting means for making a voice-synthesis-related setting for every communicating party;
identification means for identifying a communicating party; and
voice synthesizing means for producing synthesized voice of information relating to the communicating party based upon the voice-synthesis-related setting regarding the communicating party identified.

In accordance with the present invention, it is possible to enhance the entertainment value of a communication apparatus having a voice synthesizing function by allowing the user to make a voice-synthesis-related setting for every communicating party.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate an embodiment of the invention and, together with the description, serve to explain the principles of the invention.
Fig. 1 is a block diagram illustrating the structure of a telephone according to a first embodiment of the present invention;
Fig. 2 is a diagram illustrating a modular implementation of processing regarding voice readout from a telephone in this embodiment of the invention;
Fig. 3 is a flowchart illustrating the flow of processing for setting voice-synthesizing parameters in the telephone of this embodiment;
Fig. 4 is a diagram useful in describing the manner in which voice-synthesizing parameters are set;
Fig. 5 is another diagram useful in describing the manner in which voice-synthesizing parameters are set;
Fig. 6 is a diagram useful in describing a parameter table for voice synthesis; and
Fig. 7 is a flowchart illustrating the flow of processing for voice synthesis in the telephone of this embodiment.

### DETAILED DESCRIPTION OF THE PREFERRED EMBODIMENT

A preferred embodiment of the present invention will now be described in detail in accordance with the accompanying drawings.

### [First Embodiment]

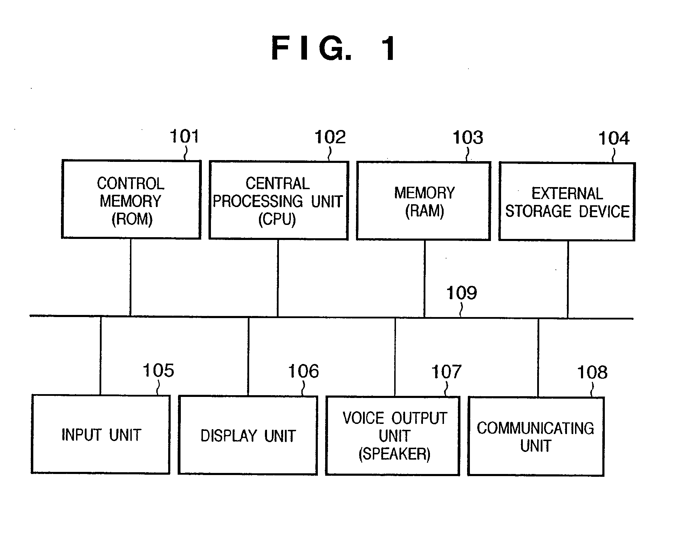

Fig. 1 is a block diagram illustrating the structure of a communication apparatus according to this embodiment. This embodiment will be described with regard to a case where the invention is mounted in a telephone as a communication apparatus having a voice synthesizing function. However, the invention is not limited to this arrangement and may take on other forms.

As shown in Fig. 1, the apparatus includes a control memory (ROM) 101, a central processing unit (CPU) 102, a memory (RAM) 103, an external storage device 104, an input unit 105, a display unit 106, a voice output unit (speaker) 107, a communicating unit 108 and a bus 109.

A control program executed in the telephone of this embodiment and data used by this control program are stored in the external storage device 104. Under the control of the CPU 102, the control program and data are loaded in the memory 103 via the bus 109 and the program is executed by the CPU 102. It goes without saying that the control program and data may be stored in the control memory 101. Further, the sending and receiving of telephone calls and the sending and receiving of data via the Internet are executed by the communicating unit 108.

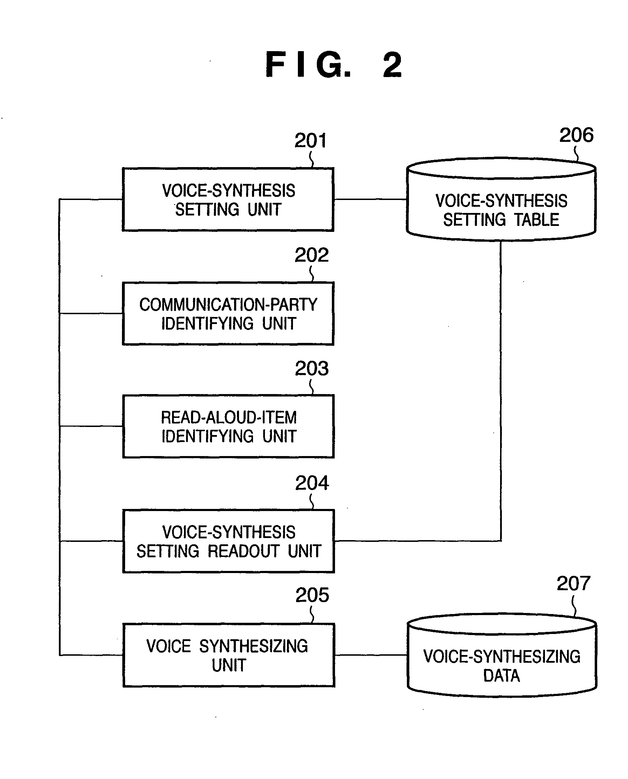

Fig. 2 is a block diagram illustrating a modular implementation of processing regarding voice readout from the telephone in this embodiment of the invention. A voice-synthesis setting unit 201 performs a voice-synthesis setting for every communicating party and every item to be read aloud by voice and stores the content of these settings in a voice-synthesis setting table 206. A communication-party identifying unit 202 identifies the communicating party, such as a caller of an incoming call or the source of an e-mail transmission. A read-aloud-item identifying unit 203 identifies what is the information that is to be read aloud by synthesized sound. A voice-synthesis setting readout unit 204 reads voice-synthesis settings, which correspond to the identified communicating party and identified read-aloud item, out of the voice-synthesis setting table 206. In accordance with the settings read out, a voice synthesizing unit 205 executes voice synthesis using acoustic data, etc., which is retained in voice-synthesizing data 207, necessary for voice synthesis and outputs synthesized sound.

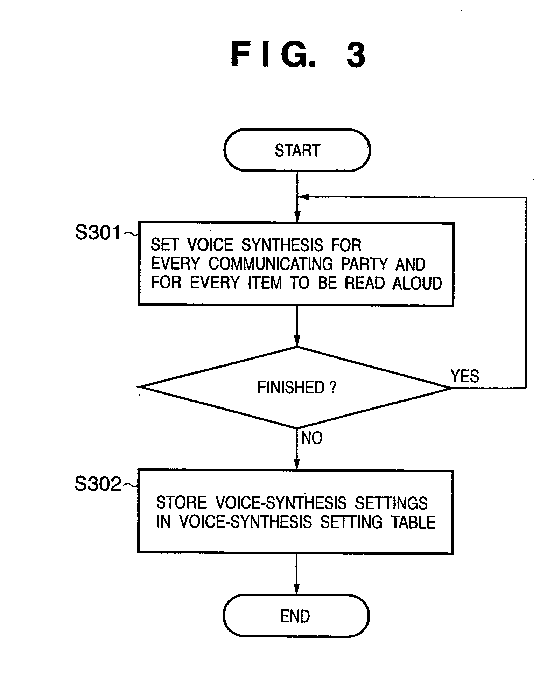

A method of setting voice synthesis according to this embodiment will be described in accordance with the drawings. Fig. 3 is a flowchart illustrating the flow of processing for performing voice-synthesis settings for every communicating party and every item to be read out aloud. This processing is executed by the voice-synthesis setting unit 201.

At step S301, the user makes a voice-synthesis setting for every communicating party, such as the originating source of a telephone call or the source of an e-mail transmission, and for every item to be read out aloud (e.g., notification of an incoming call, notification of incoming e-mail and content of e-mail). When synthesized sound is created, settings capable of being changed relate to items of information necessary for read-out aloud, such as type of voice, speed at which an item is read out aloud, voice pitch and answer messages, etc. The type of voice mentioned here is that of a speaking individual that is the source of acoustic data used in creating synthesized sound, such as the voice of a child, the voice of a woman or the voice of a man.

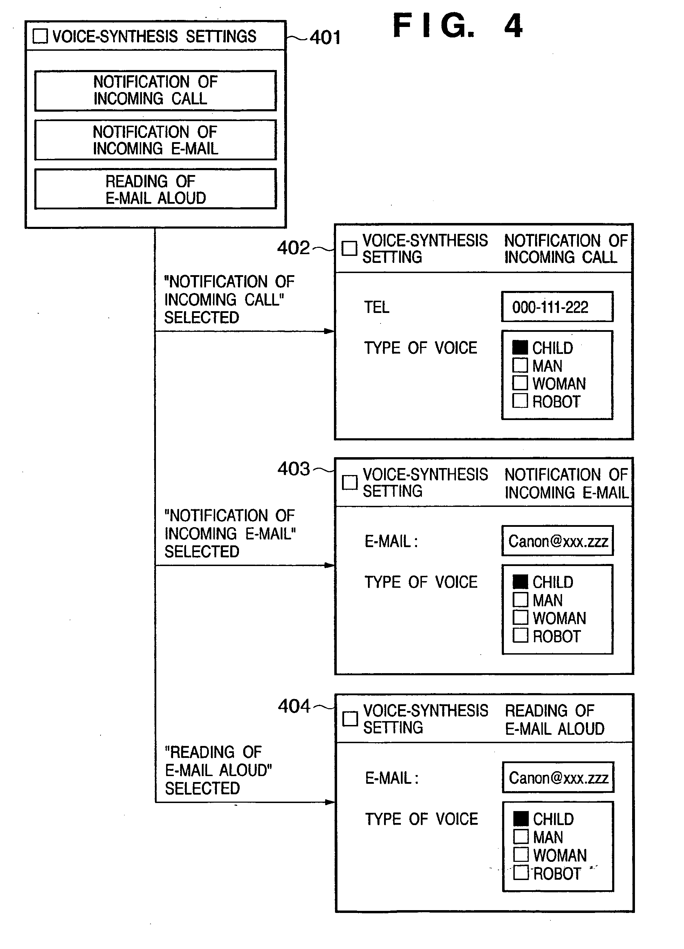

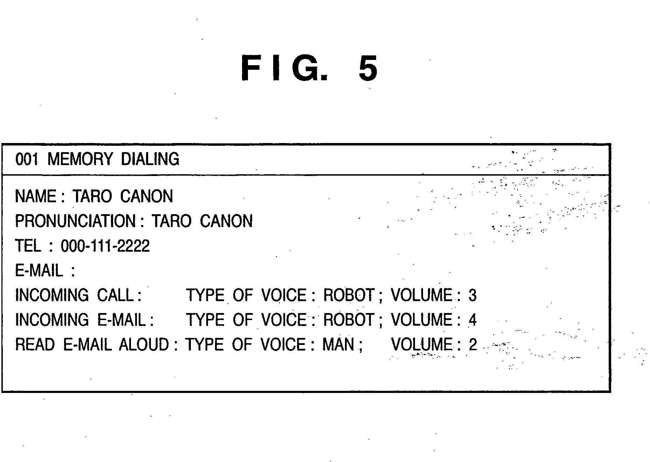

An example of a method of setting voice synthesis is illustrated in Figs. 4 and 5. The setting method illustrated in Fig. 4 sets voice synthesis, which corresponds to the telephone number (or e-mail address) of each communicating party, for every item to be read aloud. In the example of Fig. 4, first the item to be read aloud is selected (401), then the communicating party and type of voice to be used in read-out aloud are selected for every item to be read aloud (402 to 404). Fig. 5 illustrates an example in which set items for voice synthesis have been added to an address book (telephone directory) for collectively managing information for every individual, this being implemented in a mobile telephone or multifunction telephone. Fig. 5 illustrates the manner in which type of voice and volume have been set using voice synthesis for arrival of e-mail and for reading aloud the content of e-mail.

When setting of voice-synthesizing parameters for every communicating party and item to be read aloud ends, the set content is stored in the voice-synthesis setting table 206 at step S302. In should be noted that in a case where setting for voice synthesis is managed by an address book (telephone directory), as in the setting method shown in Fig. 5, the content stored in the voice-synthesis setting table 206 may be mounted in a form included in the address book.

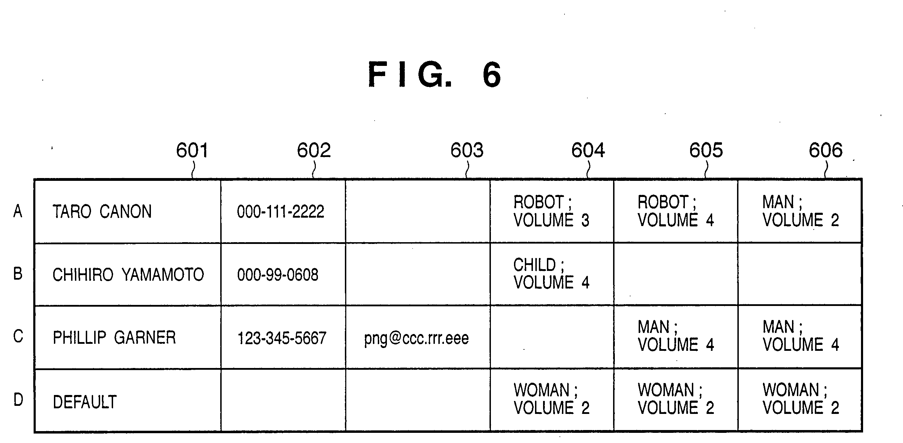

Fig. 6 illustrates an example of data stored in the voice-synthesis setting table 206. The following items are stored for every line: a telephone number in a column 602, an e-mail address in a column 603, a voice-synthesis setting, which is used when giving notification of an incoming call, in a column 604, a voice-synthesis setting, which is used when giving notification of incoming e-mail, in a column 605, and a voice-synthesis setting, which is used when reading the content of e-mail aloud, in a column 606.

The names and pronunciations thereof corresponding to telephone numbers and e-mail are stored in a column 601. The fourth line (D) is for setting of initial values of settings for voice synthesis. This is applied to a communicating party or item read out aloud for which voice-synthesis settings have not been made in subsequent processing. It may be so arranged that the initial values can be set by the user at step S301.

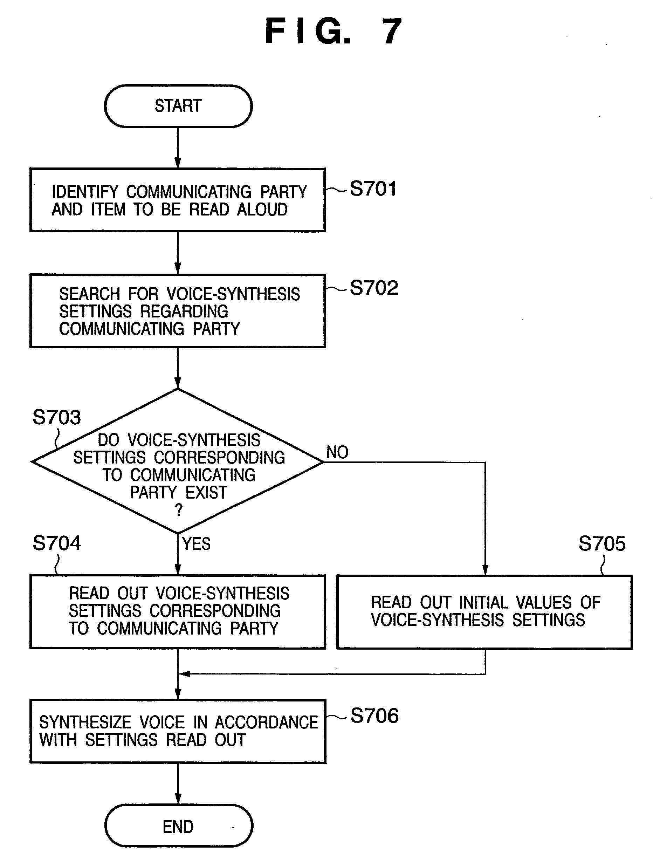

Next, reference will be had to Fig. 7 to describe processing for voice readout in a case where the voice-synthesis setting table shown in Fig. 6 is used. Fig. 7 is a flowchart illustrating an example of an operation for voice readout from a telephone according to this embodiment.

An instance where an incoming call arrives will be described first.

### (1) Notification of incoming call

If an incoming call is sensed by the communicating unit 108, the communication-party identifying unit 202 identifies the communicating party, which is the source at which the call originated, and the read-aloud-item identifying unit 203 identifies the item to be read aloud by synthesized sound (step S701). The communication-party identifying unit 202 acquires the telephone number of the call originator provided by a number-display service or the like and adopts the acquired telephone number as the communicating party. The read-aloud-item identifying unit 203 identifies that the item to be read aloud by synthesized sound in response to the incoming call is notification of an incoming call. Next, the voice-synthesis setting readout unit 204 searches the voice-synthesis setting table 206 for the acquired telephone number of the communicating party and voice-synthesis settings corresponding to notification of the incoming call (step S702). In a case where voice-synthesis settings corresponding to the communicating party and notification of an incoming call exist, the settings are read out of the voice-synthesis setting table 206 (step S704) and the voice synthesizing unit 205 executes voice synthesis in accordance with the settings read out (step S706). In a case where there are no corresponding voice-synthesis settings, initial values of voice-synthesis settings are read out of the voice-synthesis setting table 206 (step S704) and voice synthesis is carried out in accordance with these settings (step S706).

If the telephone number of the call originator is found to be "000-99-0608" at step S701, then the voice-synthesis setting for notification of an incoming call corresponding to this telephone number is "CHILD; Volume 4" stored in column 604 on line B of Fig. 6. Further, if the telephone number of the call originator is found to be "123-345-5667", there is no corresponding voice-synthesis setting for notification of an incoming call, though the this telephone number has been stored in the table. Accordingly, the initial values of the voice-synthesis settings (column 604, line D in Fig. 6) "WOMAN; Volume 2" are read out (step S705) and voice synthesis is performed using these settings. If there is an incoming call from a telephone number that has not been stored in the voice-synthesis setting table 206, then voice synthesis is performed in similar fashion using the initial values of the voice-synthesis settings.

Described next will be an instance where notification is given of incoming e-mail and the content of e-mail is read aloud.

### (2) Notification of incoming e-mail and reading aloud of e-mail

The basic operation is similar to that of the case where notification of an incoming call is given. If incoming e-mail is sensed by the communicating unit 108, the communication-party identifying unit 202 identifies the communicating party by acquiring the e-mail address of the transmitting source from the "From:" field of the received e-mail at the identification step S701. Further, the read-aloud-item identifying unit 203 identifies that the item to be read aloud by synthesized sound is notification of incoming e-mail (or reading of e-mail aloud) attendant upon arrival of e-mail. Next, the voice-synthesis settings for notification of incoming e-mail (or for reading e-mail aloud) corresponding to the acquired e-mail address of the source are retrieved from the voice-synthesis setting table 206 (step S702). In case of voice-synthesis settings for notification of incoming e-mail (or for reading e-mail aloud) corresponding to the source of the transmission, the settings are read out of the voice-synthesis setting table 206 (step S704) and the voice synthesizing unit 205 executes voice synthesis using the settings read out (step S706). In a case where there are no voice-synthesis settings for notification of incoming e-mail (or for reading e-mail aloud) corresponding to the source of the transmission, initial values of voice-synthesis settings are read out of the voice-synthesis setting table 206 (step S704) and voice synthesis is carried out using these settings (step S706).

In the voice-synthesis setting table of Fig. 6, the only registered e-mail addresses are "Canon@xxx.zzz" and "png@ccc.rrr.eee". Accordingly, if the source of an e-mail transmission has an address other than these two e-mail addresses, then voice is synthesized using the initial values of voice-synthesis settings. Specifically, the settings stored in column 605, line D of Fig. 6 are used to synthesize voice in case of notification of incoming e-mail, and the settings stored in column 606, line D of Fig. 6 are used to synthesize voice in a case where e-mail is to be read aloud. The settings are "WOMAN; Volume 2" in both cases.

With regard to e-mail from "Canon@xxx.zzz" and "png@ccc.rrr.eee", voice is synthesized using the relevant settings (column 605, line A and column 606, line C, respectively).

Thus, in accordance with the present invention as will be apparent from the description above, voice that differs for every communicating party and every item to be read aloud can be synthesized in a telephone that is capable of voice synthesis. As a result, a voice can be set in accordance with user preference, as by using a plain voice in case of mail from one's office and a cute child's voice in case of mail from a child. Enjoyment is experienced by selective use of voice in a manner similar to the setting of an incoming-call alert melody in a mobile telephone.

Furthermore, since voice is synthesized for every communicating party even with regard to the reading aloud of e-mail, enjoyment is similarly enhanced. In addition, convenience is enhanced further because a communicating party can be identified by the type of voice that is heard.

### [Second Embodiment]

The foregoing embodiment has been described with regard to a case where voice type and volume are used as the voice-synthesis settings. However, the invention is not limited to such an arrangement and it is possible to adopt an arrangement in which the information relating to read-out aloud can be set. For example, it is possible to set speed at which an item is read out aloud, voice pitch and answer messages, etc.

Further, in the foregoing embodiment, notification of an incoming call, notification of incoming e-mail and the content of e-mail are described as items to be read aloud. However, the invention is not limited to this arrangement and it goes without saying that the user can make desired voice-synthesis settings for every communicating party in similar fashion with regard to other examples as well, such as the reading aloud of web pages, telephone voice guidance and answer messages for when the called party is absent. In particular, when a web page is read aloud, voice-synthesis settings can be changed for every communicating party by acquiring the URL as the communicating party in a manner similar to that when e-mail is read aloud.

### [Other Embodiments]

The present invention may be applied to a system constituted by a plurality of devices (e.g., a host computer, interface, reader, printer, etc.) or to an apparatus comprising a single device (e.g., a copier or facsimile machine, etc.).

Furthermore, it goes without saying that the object of the invention is attained also by supplying a storage medium storing the program codes of the software for performing the functions of the foregoing embodiment to a system or an apparatus, reading the program codes with a computer (e.g., a CPU or MPU) of the system or apparatus from the storage medium, and then executing the program codes.

In this case, the program codes read from the storage medium implement the novel functions of the embodiment and the storage medium storing the program codes constitutes the invention.

Examples of storage media that can be used for supplying the program code are a floppy disk, hard disk, optical disk, magneto-optical disk, CD-ROM, CD-R, magnetic tape, non-volatile type memory card or ROM, etc.

Furthermore, besides the case where the aforesaid functions according to the embodiment are implemented by executing the program codes read by a computer, it goes without saying that the present invention covers a case where an operating system or the like running on the computer performs a part of or the entire process in accordance with the designation of program codes and implements the functions according to the embodiment.

It goes without saying that the present invention further covers a case where, after the program codes read from the storage medium are written in a function expansion board inserted into the computer or in a memory provided in a function expansion unit connected to the computer, a CPU or the like contained in the function expansion board or function expansion unit performs a part of or the entire process in accordance with the designation of program codes and implements the function of the above embodiment.

The present invention is not limited to the above embodiments and various changes and modifications can be made within the spirit and scope of the present invention. Therefore, to apprise the public of the scope of the present invention, the following claims are made.

## Claims

1. A communication apparatus for producing synthesized voice of information relating to a communicating party and outputting the synthesized voice, **characterized by** comprising:
setting means for making a voice-synthesis-related setting for every communicating party;
identification means for identifying a communicating party; and
voice synthesizing means for producing synthesized voice of information relating to the communicating party based upon the voice-synthesis-related setting regarding the communicating party identified.

2. A communication apparatus for producing synthesized voice of information relating to a communicating party and of information that has been received from this communicating party and outputting the synthesized voice, **characterized by** comprising:
setting means for making a voice-synthesis-related setting for every communicating party and for every item for which voice is to be synthesized;
identification means for identifying a communicating party; and
voice synthesizing means for producing synthesized voice of information relating to the communicating party and of the information that has been received, based upon the voice-synthesis-related setting, for every item for which voice is to be synthesized, regarding the communicating party identified.

3. The apparatus according to claim 1 or 2, **characterized in that** the voice-synthesis-related setting includes at least one setting from among settings regarding type of voice, volume, read-aloud speed and voice pitch.

4. The apparatus according to claim 1 or 2, **characterized in that** the information relating to the communicating party includes at least one of source of origination of a telephone call or source of transmission of e-mail.

5. The apparatus according to claim 2, **characterized in that** the information received includes content of e-mail.

6. An information processing method in a communication apparatus for producing synthesized voice of information relating to a communicating party and outputting the synthesized voice, said method **characterized by** comprising:
a setting step of making a voice-synthesis-related setting for every communicating party;
an identification step of identifying a communicating party; and
a voice synthesizing step of producing synthesized voice of information relating to the communicating party based upon the voice-synthesis-related setting regarding the communicating party identified.

7. An information processing method in a communication apparatus for producing synthesized voice of information relating to a communicating party and of information that has been received from this communicating party and outputting the synthesized voice, said method **characterized by** comprising:
a setting step of making a voice-synthesis-related setting for every communicating party and for every item for which voice is to be synthesized;
an identification step of identifying a communicating party; and
a voice synthesizing step of producing synthesized voice of information relating to the communicating party and of the information that has been received, based upon the voice-synthesis-related setting, for every item for which voice is to be synthesized, regarding the communicating party identified.

8. The method according to claim 6 or 7, **characterized in that** the voice-synthesis-related setting includes at least one setting from among settings regarding type of voice, volume, read-aloud speed and voice pitch.

9. The method according to claim 6 or 7, **characterized in that** the information relating to the communicating party includes at least one of source of origination of a telephone call or source of transmission of e-mail.

10. The method according to claim 7, **characterized in that** the information received includes content of e-mail.

11. A storage medium storing a control program for causing the information processing method set forth in any one of claims 6 to 10 to be implemented by a computer.

12. A control program for causing the information processing method set forth in any one of claims 6 to 10 to be implemented by a computer.
